# EUROPÄISCHE PATENTSCHRIFT

(11) **EP 1 115 675 B1**
(45) Veröffentlichungstag und Bekanntmachung des Hinweises auf die Patenterteilung: **29.01.2003**
(21) Anmeldenummer: 99944457.3
(22) Anmeldetag: 20.08.1999
(51) Int. Cl.: C04B 35/528, F02F 3/00

(54) **KOLBEN AUS FEINSTKORNKOHLENSTOFF UND VERFAHREN ZU SEINER HERSTELLUNG**
PISTON CONSISTING OF FINEST GRAIN CARBON AND METHOD FOR PRODUCING THE SAME
PISTON CONSTITUE DE CARBONE A GRAINS ULTRAFINS ET PROCEDE POUR SA FABRICATION

(30) Priorität: 21.08.1998 DE 19838021
(43) Veröffentlichungstag der Anmeldung: 18.07.2001
(73) Patentinhaber: Sintec Keramik GmbH & Co.KG, 87642 Halblech (DE)
(72) Erfinder: HEGERMANN, Rainer, D-87672 Rosshaupten (DE); GOETZ, Ulrich, D-87642 Halblech (DE)
(74) Vertreter: Lempert, Jost, Dipl.-Phys. Dr. rer.nat.
(86) Internationale Anmeldenummer: EP9906120
(87) Internationale Veröffentlichungsnummer: WO00010937

(56) Entgegenhaltungen:
- EP-A- 0 552 371
- DE-A- 19 628 965
- W.R. HOFFMANN ET AL.: CARBON, Bd. 32, Nr. 6, 1994, Seiten 1087-1103, XP002124707
- J. SCHMIDT ET AL.: CARBON, Bd. 36, Nr. 7-8, 1998, Seiten 1079-1084, XP004124178

## Beschreibung

Die Erfindung betrifft einen Kolben aus Feinstkornkohlenstoff sowie ein Verfahren zur Herstellung eines Kolbenrohlings und ein Pulver aus Polyaromaten-Mesophase zur Herstellung eines Kolbens.

Als Werkstoffe für Kolben von Verbrennungsmotoren werden bisher spezielle Aluminiumlegierungen verwendet. Als Nachteil werden die relativ große spezifische Masse und die hohe Herstellungsgenauigkeit angesehen, sowie trotz derer gegebene relativ hohe Reibungsverluste.

Es wurde schon der Einsatz von Kolben aus Kohlenstoff vorgeschlagen, um Kolben mit geringer spezifischer Masse zur Erleichterung des Massenausgleichs sowie einer Verminderung der Reibungsverluste zu erhalten. Weiter verspricht man sich hiervon eine Verminderung der Schadstoffgehalte im Abgas.

Für die Entwicklung von Kohlenstoff-Werkstoffen für Verbrennungsmotoren auf diesem Wege wurden nicht nur verbesserte mechanische Eigenschaften, sondern auch spezielle thermophysikalische Eigenschaften gefordert, insbesondere eine hohe Wärmeleitfähigkeit. Der Grund für die letzte Forderung liegt in den Verbrennungsvorgängen im Zylinder, die bei Überhitzung zum sogenannten Klopfen führen können. Kolben aus Aluminium-Legierungen verfügen über Wärmeleitfähigkeiten von etwa 140 bis 160 W/mK. Für die Entwicklung von Kohlenstoff-Werkstoffen zur Substitution von Kolben aus Aluminium-Legierungen wird eine Wärmeleitfähigkeit von mindestens 60 W/mK als eine unabdingbare Voraussetzung angesehen. Als Mindestanforderung in Bezug auf die Biegebruchfestigkeit werden Werte von mehr als 120 MPa in Verbindung mit einem Weibull-Parameter von größer 20 gefordert.

Aus der Herstellungstechnologie von Kohlenstoff- bzw. Graphit-Werkstoffen ist bekannt, daß die Forderungen nach einer hohen Biegebruchfestigkeit in Verbindung mit einer hohen Wärmeleitfähigkeit konträr sind. Letztere wird nur durch eine Hochtemperaturbehandlung bei einer Temperatur von 2500°C und darüber erreicht. Bei derart hohen Temperaturen führt die Rekristallisation des Graphitgitters zu einem erheblichen Abfall der mechanischen Eigenschaften, wie der Biegebruchfestigkeit.

Zur Herstellung von Kohlenstoff- bzw. Graphit-Werkstoffen wurde vorgschlagen, körnige Kohlenstoff-Materialien, wie Kokse, Ruß oder Graphit mit einem Bindemittel, in der Regel einem thermoplastischen Pech zu mischen, zu verpressen und anschließend zu carbonisieren. Um einen graphitischen Werkstoff zu erhalten, werden Hochtemperaturbehandlungen bis in einen Temperaturbereich von über 2500°C mit dem o.g. Nachteil angeschlossen. So schlägt die DE 30 34 359 C2 die Herstellung von Kohlenstoffmaterialien durch Pulverisieren von Koks, Formen unter Zusatz von Bindemittelpech, Backen des Formkörpers in einer ersten Backstufe bei 450-700°C, Imprägnieren des gebackenen Materials wiederum mit Pech, wozu eine vorherige Abkühlung erfolgen muß und anschließendes Backen des imprägnierten Materials in einer zweiten Backstufe bei wenigstens 1000°C zum Carbonisieren vor, wobei sich weiterhin ein Graphitierungsschritt bei einer Temperatur bis zu 3000°C anschließen kann.

Die DE 196 28 965 C2 zeigt ein Verfahren zur Herstellung eines eine Hohlform aufweisenden stockförmigen Formteils auf Kohlenstoff hoher Dichte, hoher Festigkeiten, hoher Wärmeleitfähigkeit bei dem ein Grünling gepresst, carbonisiert und anschließend graphitiert wird. Dabei wird ein binderloses und selbsthinderndes Feinkohlenstoff-Pulver, insbesondere Kohlenstoffmesophase, mit einer Pulverdichte gemäß DIN 51 913 Größe 1 g/cm³ und einer durchschnittlichen Korngröße zwischen 5 und 20 Hydrometer vorverdichtet. Das vorverdichtete Pulver wird mit einem Druck zwischen 50 und 150 MPa um einen starren, die Hohlform ausbildenden Stempel zu einem Grünling gepresst. Anschließend wird der Druck mit einer Druckrampe zwischen 0,19 und 6 MPa/min gesenkt. Weiter wird der Grünling zum Carbonisieren in einer Umgebung zunächst mit einer Aufheizgeschwindigkeit zwischen 25 K/min bis zu einer Temperatur von 200°C erwärmt und anschließend mit einer äußerst geringen Aufheizgeschwindigkeit von 0,05 bis 0,5 K/min auf eine Haltetemperatur zwischen 500 und 700°C weiter erwärmt. Die Haltetemperatur wird für eine definierte Haltezeit beibehalten. Anschließend wird die Temperatur mit einer Aufheizgeschwindigkeit zwischen 0,05 und 1 K/min auf eine Carbonisierungs-Temperatur zwischen 800 und 1200°C erhöht und diese Temperatur ebenfalls gehalten. Schließlich wird der Kohlenstoffkörper auf eine Graphitierungs-Temperatur zwischen 2000 und 3000°C in einer inerten. Atmosphäre erhitzt. Das Verfahren ist zur Behandlung eines kopfförmigen Hohlkörpers vorgesehen und mag hier angemessen sein, nicht aber für einen Kraftfahrzeugkolben. Insbesondere gibt die Druckschrift lediglich geringe Festigkeitswerte für das Ergebnis des Verfahrens und keine Hochdehnungswerte an; die Erreichten mögen für ein Gefäß hinreichend sein, sicherlich aber nicht für einen Kraftfahrzeugkolben.

Das bekannte Verfahren ist durch das Mischen und vor allem das Imprägnieren mit Pech äußerst aufwendig, da dieses eine Zwischenabkühlung nach der ersten Backstufe erfordert. Unwirtschaftlich sind auch die äußert langen Imprägnierungssowie Aufheizzeiten, die letztere mehrere Tage dauern. Das erhaltene Kohlenstoffmaterial ist nicht für Kolben vorgesehen und hierzu auch nicht geeignet, da die Biegebruchfestigkeit weit unter den für Kolben notwendigen liegt.

Die DE 44 37 558 A1 beschreibt ebenfalls die Herstellung von Graphit durch Mischen von Koks mit einem Pechbindemittel. Der vorgestellte Prozeß ist ebenfalls extrem aufwendig. Das verwendete Kokspulver besitzt eine durchschnittliche Partikelgröße von 1 µm oder weniger, die technisch irrelevant ist. Das Mischen mit dem Pech muß unter erhöhtem Druck durch Kneten erfolgen, die Mischung muß abgekühlt und auf eine durchschnittliche Partikelgröße von 4 µm repulverisiert werden. Das nunmehr vorliegende Pulver kann erst dann verpreßt werden. Aufgrund der hohen Endbehandlungstemperatur von 2800°C ist mit Sicherheit davon auszugehen, daß dieser Werkstoff eine hohe Wärmeleitfähigkeit in der Größenordnung von 60 W/mK besitzt, obwohl diese nicht angegeben ist.

Weiter wurde die Verwendung von kohlenstofffaserverstärkten Kohlenstoff (CFC) vorgeschlagen (beispielsweise WO 97/32814 A1). Derartige Werkstoffe sind sowohl aufgrund der Kohlenstofffasern als auch aufgrund der hohen Herstellungskosten an sich - in der Regel erfolgt die Bildung der Matrix durch eine Innen-Poren-Abscheidung aus der Gasphase - außergewöhlich teure Produkte. Für eine wirtschaftliche, gegenüber Aluminiumkolben konkurrenzfähige Herstellung von Kolben sind diese Materialien daher nicht geeignet. Auch ist das Verhalten bei Einsatz nicht bekannt.

Weiterhin wurde die Herstellung von Kohlenstoff-Werkstoffen auf der Basis von Polyaromaten-Mesophase vorgeschlagen.

In Wolf, R. et al, Development of binderless carbon-mesophase for production of high strength graphites (Mater.; Funct.Des.; Proc. Eur. Conf. Adv. Processes Appl., 5^{th} (1997), Volume 2, 2/341-2/344. Editor(s): Sarton, L.A.; Zeedijk, H.B., Publisher: Netherlands Society for Materials Science, Zwijndrecht, Netherlands) werden Kohlenstoff-Werkstoffe mit Biegebruchfestigkeiten von 75 bis 125 MPa und Wärmeleitfähigkeiten von 45 bis 60 W/mK sowie 15 W/mK beschrieben. Die Werkstoffe mit einer Wärmeleitfähigkeit von 45 und 60 W/mK werden als Kolben für Verbrennungsmotoren vorgeschlagen. Sie besitzen allerdings nur geringe Biegebruchdehnungen von beispielsweise 0,625 %, abgeschätzt aus der Biegebruchfestigkeit und dem Elastizitäts-Modul mit Hilfe des Hooke'schen Gesetzes.

In Mörgentaler, K.D. "Die Entwicklung einer Technologie für die konturnahe Herstellung von Kolben für Verbrennungsmotoren aus hochfesten Feinstkornkohlenstoffen (Werst. Verkehrstech., Editor(s): U. Koch, Publisher: DGM Informationsgesellschaft, Oberursel Symp.2, Werkstoffwoche '96 (1997) Meeting Date 1996, 67-72) wird über einen Rohstoff mit dem Namen CARBOSINT berichtet, der ähnliche Eigenschaften wie ein Pulver aus Polyaromaten-Mesophase haben soll. Dieser Rohstoff führt jedoch zu Kohlenstoff-Werkstoffen mit außerordentlich hoher Härte und Sprödigkeit. Die hohe Härte erfordert eine extrem aufwendige Bearbeitung, so daß diese Kohlenstoffe für die Herstellung von Kolben als Massenprodukt wenig attraktiv und aufgrund ihrer Sprödigkeit auch nicht geeignet sind. CARBOSINT soll einen Anteil an toluolunlöslichen Bestandteilen (TI) von 97 % und einen Anteil an chinolinunlöslichen Bestandteilen (QI) von 57 % haben; demzufolge beträgt die Differenz von toluolunlöslichen zu chinolinunlöslichen 40 %. An kleinen Körpern werden nach dem Sintern Festigkeiten im 3-Punkt-Biegebruchversuch von 181 bis 197 MPa erhalten. Isostatisch gepreßte große Körper mit Abmessungen bis 90 x 90 x 110 mm erreichen nach Graphitierungsbehandlung Festigkeiten im 3-Punkt-Biegebruchversuch von 148 bis 152 MPa, wobei allerdings Prozeßzeiten von 3 Monaten benötigen werden (Chemische Rundschau, Band 46, Ausgabe 13, Seite 3: Kohlenstoff für Kolben neuer Werkstoff für Verbrennungsmotoren); diese sind technisch-ökonomisch völlig irrelevant.

Nach Wolf, R., Determination of suitable mesophase powders as raw materials for the industrial process (Extended Abstracts, International Carbon Conferenz, Essen, Juni 1992, Seiten 964-966) sollen durch Sintern von Pulver aus Polyaromaten-Mesophase hergestellte Werkstoffe Biegebruchfestigkeiten im 3-Punkt-Biegebruchversuch von 90 bzw. 120 MPa sowie Wärmeleitfähigkeiten von 60 bzw. 50 W/mK aufweisen. Im letzteren Fall handelt es sich um ein borhaltiges Material mit einem Borgehalt von 10 %. Die Biegebruchdehnungen der Materialien liegen lediglich bei 0,69 und 0,67 %. Bei allen erwähnten Vorschlägen muß der Kolben aus Vollmaterial hergestellt werden, was aufgrund des hohen Arbeitsaufwandes mit Aluminiumkolben wirtschaftlich nicht konkurrenzfähig ist.

Hüttner, W. et al., Entwicklung von Kolben aus Feinkornkohlenstoff in Erdöl, Erdgas, Kohle, Heft 2, Februar 1991, Seiten 81 ff erwähnen ebenfalls Feinkornkohlenstoff auf Basis Mesophase, bei dem bereits ohne Graphitierung eine Wärmeleitfähgikeit von 45 W/mK bei einer Biegefestigkeit von 140 MPa erreicht werden soll. Kohlenstoffe ohne Hochtemperatur/Graphitierungsbehandlung sind stark oxidationsanfällig und deshalb als Werkstoffe für Kolben nicht geeignet.

Der Erfindung liegt die Aufgabe zugrunde unter Vermeidung der vorgenannten Nachteile einen Kolben für einen Verbrennungsmotor, ein Verfahren zur dessen Herstellung sowie ein geeignetes Ausgangsmaterial vorzuschlagen.

Erfindungsgemäß wird die genannte Aufgabe mit einem Kolben aus Feinstkornkohlenstoff gelöst, der eine Biegebruchdehnung von mehr als 0,8 %, einen mittleren Schichtebenenabstand c/2 von kleiner 0,35 nm, eine mittlere Kristallitgröße in c-Richtung von mehr als 5 nm und eine Wärmeleitfähigkeit von mindestens 10 W/mK besitzt, wobei der Kolben insbesondere auf einem konturnah quasi-statisch verdichteten Kolben-Grünling aus Polyaromaten-Mesophase basiert, der einer Hochtemperaturbehandlung unterzogen wurde.

Zur Lösung der genannten Aufgabe ist weiterhin ein Verfahren zur Herstellung eines Kolbenrohlings aus Feinstkornkohlenstoff vorgesehen, das die folgenden Schritte umfaßt:
a) Endkonturnahes Verdichten eines Pulvers aus Polyaromaten-Mesophase zu einem Kolben-Grünling, mit einem Anteil an chinolinlöslichen Bestandteilen von ≥ 85 Gew.-%, vorzugsweise ≥ 88 Gew.-% und mit einem Anteil an toluolunlöslichen Bestandteilen von ≥ 90 Gew.-%, vorzugsweise ≥ 93 Gew.-%, wobei ein aus dem Pulver nach Sintern bei Umgebungsdruck in nicht oxidierender Atmosphäre bis 1000°C hergestellter Formling einen Masserückstand von mehr als 90 Gew.-% der Masse vor dem Sintern besitzt.
b) Erhitzen des Grünlings bei Umgebungsdruck unter einer nicht-oxidierenden Atmosphäre auf eine Temperatur von 900 bis 1300°C und Halten auf dieser Temperatur (Sintern),
c) Durchführen einer Hochtemperaturbehandlung des gemäß b) gebildeten Formlings unter Aufheizen auf eine Temperatur von 1400 bis 2400°C und Halten auf dieser über 2 bis 20 Stunden (Graphitieren), und
d) Abkühlen des Formling mit einer Abkühlgeschwindigkeit von weniger als 4 K/min auf Umgebungstemperatur.

Weiterhin sieht die Erfindung zur Lösung der genannten Aufgabe ein Pulver aus Polyaromaten-Mesophase zur Herstellung eines Kolbenrohlings vor, welches dadurch gekennzeichnet ist, daß
a) einen Anteil an chinolinunlöslichen Bestandteilen von ≥ 85 Gew.-%, vorzugsweise ≥ 88 Gew.-%;
b) einen Anteil an toluolunlöslichen Bestandteilen von ≥ 90 Gew.-%, vorzugsweise von ≥ 93 Gew.-%, und das weiter dadurch gekennzeichnet ist, daß
c) ein aus dem Pulver nach dem Sintern in nicht-oxidierender Atmosphäre bei Umgebungsdruck bis 1000°C hergestellter Formling einen Massenrückstand von mehr als 90 Gew.-% der Masse vor dem Sintern besitzt.

Die Erfindung schlägt einen Kolben vor, der neben den weiteren im Anspruch 1 genannten Parametern insbesondere eine hohe Biegebruchdehnung von mehr als 0,8 % hat. Ein derartiger Kolben weist eine hohe Standfestigkeit im Dauerbetrieb auf und ermöglicht erst einen praktischen Einsatz eines wirtschaftlich vertretbar endkonturnah gefertigten Kolbens im Dauer- und Masseneinsatz in Verbrennungsmotoren, Verbrennungsmaschinen oder Kolbenverdichtern. Die Herstellung eines solchen Kolbens ist insbesondere aufgrund des anspruchsgemäßen Pulvers sowie gemäß den Merkmalen der Verfahrensansprüche möglich.

Das erfindungsgemäß vorgesehene Pulver aus Polyaromaten-Mesophase zur Herstellung eines Kolbenrohlings weist beim Sintern geringen Massenverlust auf. Dies ist wichtig für eine wirtschaftliche Fertigung, da nur ein geringer Massenverlust eine hohe Geschwindigkeit beim Sintern ermöglicht. Darüber hinaus ist hierdurch erst eine endkonturnahe Formgebung des Grünlings möglich. Das Pulver hat weiterhin eine hohe Sinteraktivität, so daß sich nach dem Sintern die relevanten mechanischen Eigenschaften, wie hohe Biegebruchfestigkeit und insbesondere die hohe Biegebruchdehnung ergeben. Darüber hinaus weist das Pulver eine hohe kristalline Vorordnung auf, so daß sich nach Hochtemperaturbehandlung bereits bei relativ tiefen Temperaturen eine hohe Wärmeleitfähigkeit einstellt. Dieses Kriterium ist von zweifacher Bedeutung. Ein wesentlicher Vorteil der Verwendung des erfindungsgemäßen Mesophasen-Pulvers insbesondere gegenüber mit Pech zu vermischenden und zu imprägnierenden Kohlenstoffen liegt darin, daß nach einer ersten Backstufe oder einem Vorsintern keine Abkühlung zum Imprägnieren Pech erforderlich ist, viel mehr der Formling nach relativ kurzem Halten auf der Vorsintertemperatur weiter auf die Sintertemperatur erhitzt werden kann.

Die Begrenzung der Endbehandlungstemperatur trägt entscheidend zur Erhöhung der Wirtschaftlichkeit des Verfahrens bei. Außerdem muß ein signifikanter Abfall der Biegebruchfestigkeit und Biegebruchdehnung nicht in Kauf genommen werden. Durch die erfindungsgemäße Maßnahme wird die Herstellung eines Kohlenstoff-Kolbens als Massenprodukt möglich, der gegenüber Aluminiumkolben konkurrenzfähig ist. Darüber hinaus kann die Temperaturbehandlung, insbesondere die Hochtemperaturbehandlung zum Graphitieren bei relativ niedrigen Temperaturen erfolgen, wobei darüber hinaus eine relativ hohe Temperaturerhöhungsrate möglich ist, was zu kurzen Herstellungszeiten und damit zur Erhöhung der Wirtschaftlichkeit beiträgt.

Gemäß weiterer bevorzugter Ausgestaltung der Erfindung ist vorgesehen, daß der Kolben eine Wärmeleitfähigkeit von mehr als 20 W/mK, weniger als 60 W/mK, vorzugsweise weniger als 45 W/mK besitzt. In überraschender Weise wurde festgestellt, daß gerade auch ein Kolben mit einer relativ geringen Wärmeleitfähigkeit von weniger als 60 W/mk bzw. tragen weniger als 45 W/mk in keiner Weise die von von der Fachwelt befürchteten Nachteile beim Dauereinsatz zeigt, sondern vielmehr, soweit die weiter in Anspruch 1 genannten Voraussetzungen erfüllt sind, seine Aufgabe bestens dauerhaft erfüllt.

Eine weitere bevorzugte Ausgestaltung des Kolbens sieht vor, daß er eine Biegebruchfestigkeit von mindestens 120 MPa, vorzugsweise mehr als 140 MPa und eine Biegebruchdehnung von mehr als 0,9 %, vorzugsweise mehr als 1,0 % besitzt.

Darüber hinaus kann in bevorzugter Ausgestaltung vorgesehen sein, daß die mittlere Kristallit-Größe in c-Richtung mehr als 10 nm, vorzugsweise mehr als 15 nm beträgt. In weiterer Ausbildung kann vorgesehen sein, daß der Kolben einen Gehalt an die Oxidation des Kohlenstoffs unter Einsatzbedingungen des Kolbens katalisierenden Elementen, insbesondere aus der Gruppe der Übergangsmetalle, Alkali-und Erdalkalimetalle von weniger als 0,15 Gew.-%, vorzugsweise weniger als 0,1 Gew.-% aufweist. Darüber hinaus kann der Kolben einen Gehalt an die Oxidation des Kohlenstoffs unter den Einsatzbedingungen des Kolbens inhibierenden Elementen aus Bor, Silicium und Phosphor von weniger als 2 Gew.-% aufweisen. Das Raumgewicht des Kolbens beträgt vorzugsweise mehr als 1,75 g/ccm, vorzugsweise mehr als 1,80 g/ccm.

In bevorzugter Ausgestaltung des erfindungsgemäßen Verfahrens ist vorgesehen, daß ein Pulver aus Polyaromaten-Mesophase mit den o.g. Eigenschaften eingesetzt wird. Dabei erfolgt die Druckbehandlung des Pulvers aus Polyaromaten-Mesophase vorzugsweise mit einem Druck von mindestens 80 MPa auf eine Gründichte von mehr als 1,25 g/ccm.

Bei der Temperaturbehandlung wird der Grünling in der Regel auf die Sintertemperatur erhitzt und auf dieser gehalten über maximal 120 Stunden, vorzugsweise höchstens 50 Stunden.

In bevorzugter Ausgestaltung wird dabei der Grünling zunächst auf eine Zwischentemperatur von 350 bis 450°C erhitzt und auf dieser Temperatur über eine Zeit von 1,5 bis 5 Stunden gehalten. Die Erwärmung auf die Zwischentemperatur von 350 bis 450°C erfolgt in der Regel in einer Zeit zwischen 4 und 40 Stunden, vorzugsweise innerhalb maximal 20 Stunden.

Das weitere Erhitzen des Grünlings von der genannten Zwischentemperatur auf die Sintertemperatur kann in einer Zeit zwischen 10 und 90 Stunden, vorzugsweise innerhalb maximal 40 Stunden erfolgen.

In vorteilhafter Ausgestaltung wird der auf die Sintertemperatur erhitzte Formling auf dieser über bis zu 10 Stunden gehalten.

Der gepreßte Grünling wird dabei vorzugsweise mit einer Aufheizgeschwindigkeit von 0,1 bis 2 K/min erhitzt. Die erfindungsgemäß vorgesehenen Erhitzungs- und Haltezeiten liegen wesentlich unter denen des Standes der Technik. Die Erfindung arbeitet mit relativ hohen Aufheizgeschwindigkeiten.

Eine wesentliche Lehre der Erfindung liegt weiterhin darin, daß der Temperaturanstieg bevorzugt nicht mit der gleichen Aufheizgeschwindigkeit, sondern mit verschiedenen Aufheizgeschwindigkeiten erfolgt. Dabei ist insbesondere vorgesehen, daß der vorgesinterte Grünling auf die Sintertemperatur von 900 bis 1300°C in verschiedenen Temperaturbereichen mit verschiedenen Geschwindigkeiten erfolgt, die sich wie 1:5 bis 1:1 verhalten, wobei sich der erste Temperaturbereich bis 600°C und der zweite Temperaturbereich bis zur Endtemperatur des Sinterns erstreckt.

In einer bevorzugten Ausgestaltung des Verfahrens ist vorgesehen, daß der gesinterte Formling zunächst abgekühlt und anschließend der Graphitierung unterzogen wird. Zur Vornahme derselben erfolgt vorzugsweise ein Erhitzen des Formlings auf die Graphitierungstemperatur mit einer Aufheizgeschwindigkeit von 0,1 bis 2 K/min.

In vorteilhafter Weise kann der nach der Graphitierung abgekühlte Rohling einer mechanischen oder chemischen Feinnachbehandlung zur endgültigen Formgebung des Kolbens und/oder zur Einstellung seiner Eigenschaften unterzogen werden. Die endgültige Formgebung erfordert dabei nur geringe Nachbehandlungen, da aufgrund der endkonturnahen Ausbildung des Grünlings der abgekühlte Rohling der Endform sehr nahekommt; insbesondere ist keine Nachbehandlung des Innenhohlraums des Rohlings erforderlich.

Ein bevorzugtes erfindungsgemäßes Pulver ist gekennzeichnet durch
a) eine Pyknometerdichte von > 1,40 g/ccm;
b) einen Sauerstoffgehalt von weniger als 3 Gew.-%, bevorzugt weniger als 2 Gew.-%;
c) einen Veraschungsrückstand von weniger als 0,25 Gew.-%, bevorzugt weniger als 0,2 Gew.-%;
d) einen mittleren Korndurchmesser der Kornverteilungssummenkurve d50 von 3 bis 12 µm, bevorzugt von 5 bis 10 µm
e) einen Grobkornanteil der Kornverteilungssummenkurve mit einem Korndurchmesser von d ≥ 20 µm von weniger als 5%.

Die Erfindung beinhaltet darüber hinaus die Verwendung eines Kolbens aus Feinstkornkohlenstoff in Verbrennungsmotoren, insbesondere Benzin-, Diesel- oder gasbetriebenen Motoren, sowie in Kolbenverdichtern.

Weitere bevorzugte Ausgestaltungen und Merkmale der Erfindung ergeben sich aus den Ansprüchen und aus der nachfolgenden Beschreibung bevorzugter Ausbildungen der Erfindung unter Bezugnahme auf die beigefügten Tabellen und Diagramme. Dabei zeigt:
- Tabelle 1: Daten eines bevorzugten Mesophasen-Pulvers
- Tabelle 2: Eigenschaften von Kolben nach Sintern und Hochtemperaturbehandlung;
- Tabelle 3-5: Daten der Kolben nach den Beispielen 3-5 in Vergleich mit Aluminium-Kolben;
- Figur 1: ein Laufzeit-Verschleiß-Diagramm;
- Figur 2: ein Diagramm zu einem Sinterprogramm für kleine und mittlere Kolben; und
- Figur 3: ein Diagramm zu einem Sinterprogramm für große Kolben.

Ein äußerst bevorzugtes Pulver einer Polyaromaten-Mesophase zur Herstellung eines Kolbens ist in der Tabelle 1 angegeben. Der Masseverlust beim Sintern ist in der Tabelle 1 nicht mit aufgeführt, da er sowohl von dem Volumen des zu sinternden Teils, dem bei Verdichten des Pulvers angewandten Preßdruck als auch der Aufheizgeschwindigkeit beim Sintern abhängt. Das bevorzugte Pulver weist auch unter ungünstigsten Bedingungen, d.h. beispielsweise bei einer Körperdicke von nur 10 mm, in einem weiten Bereich von Preßdrükken von beispielsweise 100 bis 200 MPa, und in einem weiten Bereich von Aufheizgeschwindigkeiten von beispielsweise 0,1 bis 1,0 K/min nach Sintern bis 1000°C einen Masseverlust von eindeutig unter 10 Gew.-% auf. In der Regel, d.h. unter den für die Herstellung von Kolben üblichen Bedingungen liegt der Masseverlust zwischen 9,5 und 9%, der deutlich unter anderweitig bekanntgewordenen Masseverluste von Polyaromaten-Mesophase-Pulver liegt.

Es wurden Untersuchungen mit erfindungsgemäßen Pulvern an monoaxial verdichteten quaderförmigen Probekörpern von etwa 10 mm Dicke durchgeführt. Die Verdichtung erfolgte mit Preßdrücken von 100 bis 150 MPa, das Sintern der Probekörper erfolgte bei Umgebungsdruck in nicht-oxidierender Atmosphäre bis 1000°C mit einer konstanten Aufheizgeschwindigkeit von 0,5 K/min. Die Haltezeit bei 1000°C betrug 2-15 Stunden. Anschließend wurden die gesinterten Probekörper mit 1 K/min auf Temperaturen von 1800 bis 2200°C aufgeheizt. Die Haltezeit bei Endtemperatur betrug 2-10 Stunden. Zuletzt erfolgte die Abkühlung mit weniger als 4 K/min auf Raumtemperatur. Anschließend wurden mechanische Eigenschaften, Wärmeleitfähigkeit und kristalline Vorordnung bestimmt. In Bezug auf die mechanischen Eigenschaften wurde gefunden, daß bis 1800°C die Biegebruchfestigkeit im Vergleich zu derjenigen nach dem Sintern in der Regel unverändert bleibt. Es wurden Werte zwischen 115 und 145 MPa bestimmt. In Übereinstimmung mit der Literatur wurde ein monotoner Abfall des Elastizitäts-Moduls bis 2200°C gefunden. Der Abfall des Elastizitäts-Moduls ist bis zu 1800°C maximal und mit einer überraschenden Zunahme der Biegebruchdehnung im Vergleich zu derjenigen nach dem Sintern verbunden. Typischerweise steigt die Biegerbruchdehnung von Werten um 0,5 bis 0,65 % nach dem Sintern auf Werte über 0,8 %, in der Regel auf Werte über 0,9 % an. Bei Temperaturen deutlich über 1800°C setzt jedoch eine Abnahme der Biegebruchdehnung ein.

Aufgrund dieser Untersuchungen liegt die optimale Endbehandlungstemperatur in Bezug auf die mechanischen Eigenschaften im Bereich um 1800°C. Messungen der Wärmeleitfähigkeit wurden deshalb an Proben nach Behandlung bei 1800°C vorgenommen. Hierbei ergaben sich abhängig von der Verdichtung des Pulvers mit verschiedenen Preßdrücken und der Haltezeit bei der Endtemperatur von 1800°C Wärmeleitfähigkeiten zwischen 22 und 35 W/mK. Röntgenographische Untersuchungen an denselben Proben ergaben mittlere Schichtebenenabstände (c/2) von maximal 0,346 nm und mittlere Kristallitgrößen senkrecht zu den Schichtebenen (Lc) von minimal 10 nm, im Mittel von 15 nm. Diese Ergebnisse bestätigten die Rekristallisationsfähigkeit des aus dem speziellen Pulver aus Polyaromaten-Mesophase hergestellten Kohlenstoffs.

Basierend auf diesen Ergebnissen wurden Kolben für nachstehend aufgeführte Motortypen gefertigt.

Kolben mit Endmaßen von ca. 40 und 52 mm im Durchmesser wurden für Zweitakt-Motoren, Kolben mit Endmaßen von ca. 65 mm und 80 mm im Durchmesser für Viertakt-Motoren gefertigt. Die endkonturnahe Formgebung erfolgte durch quasi-isostatisches Pressen mit Preßdrücken von 100 bis 150 MPa, das Sintern der Kolben bei Umgebungsdruck in nicht-oxidierender Atmosphäre. Das Temperaturprogramm beim Sintern wurde an die Größe der Kolben adaptiert. Bei den Kolben bis zu einem Durchmesser von 65 mm wurde die Endtemperatur von etwa 1000°C in weniger als 1,5 Tagen, bei Kolben bis zu einem Durchmesser von etwa 80 mm in weniger als 2 Tagen erreicht.

Hierbei handelt es sich wie erwünscht um hohe Aufheizgeschwindigkeiten bzw. kurze Sinterzeiten. Durch diese Aufheizgeschwindigkeiten wird die Wirtschaftlichkeit des Verfahrens im Vergleich zum Stand der Technik untermauert. Nach dem Sintern wurden die Kolben auf Raumtemperatur abgekühlt und in einem Hochtemperaturofen bei 1800°C endbehandelt. Das Aufheizen auf diese Temperatur erfolgte in weniger als einem Tag. Begrenzung der Endbehandlungstemperatur und schnelles Aufheizen tragen weiter zur Wirtschaftlichkeit des Verfahrens bei. Eine Temperatur von 1800°C stellt insbesondere geringere Anforderungen an die Ofenkonstruktion und beansprucht den Ofen wesentlich weniger als übliche Endbehandlungstemperaturen zwischen 2500 und 3000°C, die notwendig sind, um eine Wärmeleitfähigkeit von mindestens 60 W/mK zu erreichen.

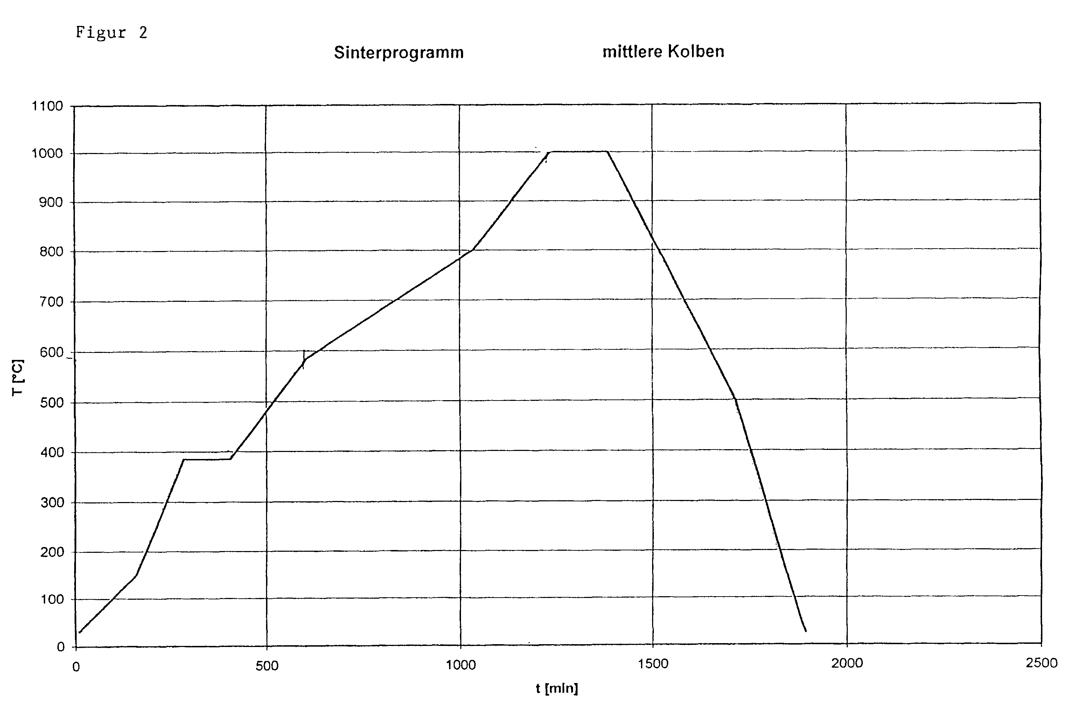

Ein typisches Temperaturprogramm beim Sintern der Kolben besteht aus mehreren Stufen, die nacheinander durchlaufen werden. Als Beispiel wird das Temperaturprogramm beim Sintern eines Kolbens mit etwa 65 mm Durchmesser wiedergegeben (Fig. 2). Von Raumtemperatur bis in den Temperaturbereich um 380°C wurde mit einer mittleren Geschwindigkeit von ca. 1,4 K/min aufgeheizt, die Haltezeit in diesem Temperaturbereich betrug 2 Stunden. Anschließend wurde mit ca. 1 K/min bis in den Temperaturbereich um 600°C weiteraufgeheizt. Zwischen diesem Temperaturbereich und 1000°C betrug die mittlere Aufheizgeschwindigkeit ca. 0,8 K/min, die Haltezeit bei 1000°C ca. 2,5 Stunden. Die Abkühlung auf Raumtemperatur erfolgte mit weniger als 4 K/min. Auf das Sintern folgt eine thermische Nachbehandlung, bei der ab 1000°C mit ca. 1 K/min auf 1800°C aufgeheizt wurde. Die Haltezeit bei Endtemperatur betrug ca. 5 Stunden. Die anschließende Abkühlung auf Raumtemperatur erfolgt mit weniger als 4 K/min. Bei Kolben mit kleinerem oder größerem Durchmesser werden die Temperaturprogramme entsprechend adaptiert. Das bedeutet, daß für Kolben mit kleinerem Durchmesser entsprechend höhere Aufheizgeschwindigkeiten und in der Regel kürzere Haltezeiten verwendet werden und umgekehrt.

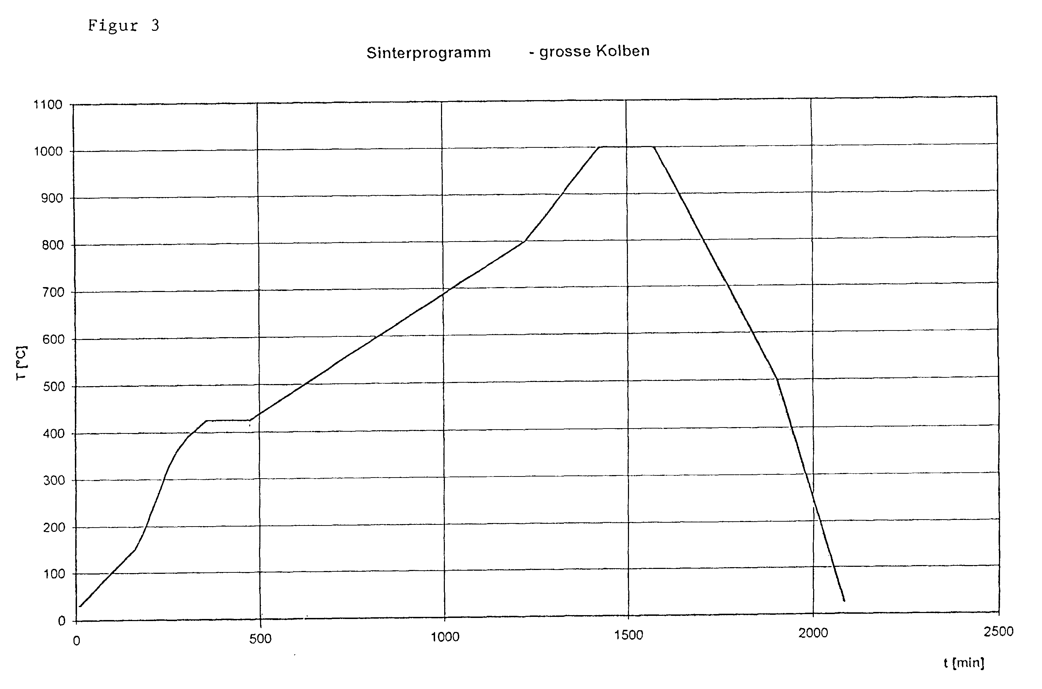

Ein typisches Sinterprogramm für einen Kolben mit etwa 80 mm Durchmesser wird in Fig. 3 gezeigt. So erfolgt der Temperaturverlauf entsprechend der Fig. 3 im wesentlichen ähnlich der Fig. 2, wobei lediglich mit geringfügig kleineren Aufheizgeschwindigkeiten gearbeitet wird. Darüber hinaus wird die Vorsinterung mit Konstanthaltung der Temperatur über eine gewisse Zeit bei einer Temperatur etwas höher als 400°C durchgeführt. Eigenschaften von Kolben unterschiedlichen Durchmessers nach Sintern und Hochtemperaturbehandlung bei 1800°C sind in Tabelle 2 angegeben.

In den folgenden Beispielen sind die Ergebnisse von Motortests mit verschiedenen Kolben wiedergegeben. Aus diesen Untersuchungen ergaben sich überaus überraschende Ergebnisse. Es wurde nämlich im Gegensatz zum Stand des Wissens und der Technik und den daraus folgenden Schlußfolgerungen gefunden, daß alle untersuchten Kolben, sowohl in den Zwei-Takt- als auch in den Viertaktmotoren, trotz der nur mittleren Wärmeleitfähigkeit ein hervorragendes Verhalten zeigten. Das aufgrund der mittleren bis mäßigen Wärmeleitfähigkeit in der Literatur postulierte Klopfen trat in keinem Falle auf. Außerdem wurden signifikante Verbesserungen der Motorleistung, eindeutig reduzierte Schadstoffgehalte im Abgas sowie ein verringerter Treibstoff- und Ölverbrauch ermittelt. Verschleißmessungen ergaben in den ersten Stunden einen minimalen Einlaufverschleiß, der deutlich unter dem konventioneller Kolben aus Aluminium-Legierungen liegt. Untersuchungen unter gleichen Bedingungen (Zweitaktmotor, Kolbendurchmesser 52 mm) mit einem nicht näher spezifizierten Kolben aus Feinstkorngraphit ergaben dagegen einen deutlich höheren Einlaufverschleiß. Das günstige Verhalten des erfindungsgemäßen Kolbens kann nur eine Folge der geringeren Endbehandlungstemperatur sein.

Im weiteren werden konkrete Versuchsbeispiele beschrieben.

### Beispiel 1

Verwendet wurde ein der Tabelle 1 entsprechendes Pulver aus Polyaromaten-Mesophase. Dieses wurde quasiisostatisch bei einem Druck von 120 MPa zu Kolbenrohlingen mit einem Durchmesser von 80 mm (für einen Kolben mit 65 mm Enddurchmesser) gepreßt. Die Rohlinge wurde bei Umgebungsdruck in nicht-oxidierender Atmosphäre mit voranstehend beschriebenem Aufheizprogramm bis zu einer Temperatur von 1000°C gesintert. Die Ergebnisse nach dem Sintern sind in Tabelle 2 aufgeführt. Die Biegebruchfestigkeit erreicht einen Wert knapp unter 140 MPa, der Elastizitätsmodul ist mit 22,9 GPa noch sehr hoch; demzufolge ergibt sich eine Biegebruchdehnung von nur 0,6 %. Nach Endtemperaturbehandlung bei 1800°C ergeben sich folgende Ergebnisse: Die Biegebruchfestigkeit bleibt in diesem Fall mit 137 MPa nahezu unverändert, der Elastizitätsmodul fällt auf 14,6 GPa, so daß sich eine Biegebruchdehnung von 0,94 % ergibt. Bei den angegebenen Werten handelt es sich um Mittelwerte; die Biegebruchstäbe wurden aus dem Kolbenrohling präpariert, und zwar aus dem Kolbenboden, aus dem Bereich des Kolbenauges und aus dem Kolbenhemd. Für Proben aus Kolbenboden und Kolbenhemd ergeben sich Abweichungen der Biegebruchfestigkeit von etwa + 2 % bis - 4,5 %. Derartig hergestellte Kolben wurden auf Endmaße (Außenkontur) bearbeitet (Kolbendurchmesser 65 mm). Die Abfallstücke wurden bei 900°C in strömender Luft verascht, um den Aschegehalt zu ermitteln. Hierbei ergab sich ein Mittelwert aus drei Einzelproben von 0,19 ± 0,04 %.

Einige Kolben wurden chemisch nachbehandelt, und zwar durch Imprägnieren mit Silicium-, Bor- oder Phosphor-enthaltenen Verbindungen (Polysiloxanen, Bor- und Phosphorsäure bzw. deren Ester). Imprägnierungen dieser Art sind für gängige Ottomotoren nicht erforderlich, für Mager- oder Dieselmotoren vorteilhaft.

### Beispiel 2

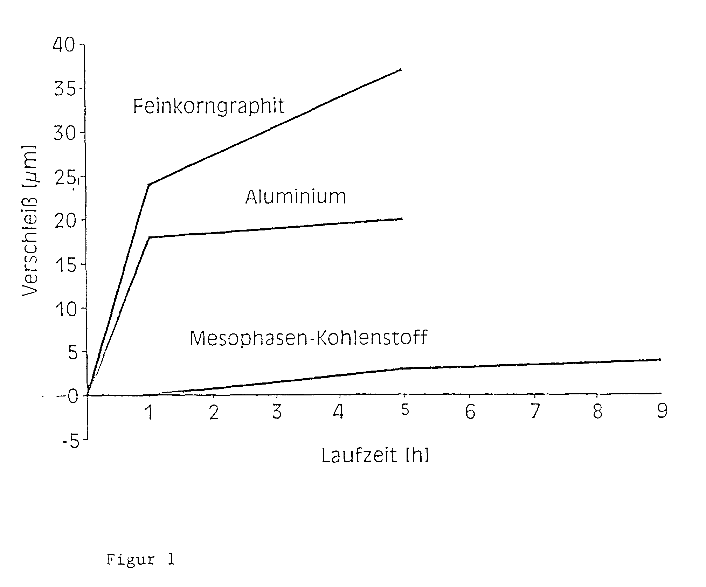

Es wurden gemäß Beispiel 1 Kolben mit einem Durchmesser von 52 mm (Enddurchmesser) in einem Zwei-Takt-Motor eingesetzt; die Eigenschaften des Kolbens zeigt Tabelle 2. Untersucht wurde das Verschleißverhalten während der Einlaufphase. Die Ergebnisse sind in Fig. 1 wiedergegeben. Es zeigt gegenüber konventionell eingesetzten Aluminium-Kolben einen deutlich geringeren Einlaufverschleiß.

### Beispiel 3

Es wurden gemäß Beispiel 1 gefertigte Kolben mit einem Durchmesser von 65 mm (Enddurchmesser) in einen Vier-Takt-Motor zwecks Leistungsprüfungen eingesetzt. Der Motor wurden nicht speziell auf die Verwendung von Kohlenstoff-Kolben ausgelegt. Die Geometrie des Kohlenstoff-Kolbens wurde gegenüber dem Serienkolben aus Aluminium den Eigenschaften des Kohlenstoffs angepaßt. Die Ergebnisse sind in Tabelle 3 wiedergegeben. Ohne jegliche Optimierung der Motoreinstellung ist eine geringfügige Leistungserhöhung bei einem gleichzeitigen Minderverbrauch an Kraftstoff von bis zu 15 % zu erkennen. Die Reduzierung des CO-Gehaltes (Vol-%) im Abgasstrom ist deutlich höher als die Zunahme des CO2-Gehaltes (Vol-%). Besonders signifikant ist der Rückgang des Gehaltes (Vol-%) an Kohlenwasserstoffen im Abgasstrom. Sämtliche Abgaswerte untermauern den verminderten Kraftstoffverbrauch. Der Motor wurde bis zur Maximaldrehzahl von 4000 UpM belastet. Bei insgesamt drei untersuchten Kolben trat in keinen Falle ein Defekt auf; der Motorlauf war auch nach mehr als 100 Stunden einwandfrei. Ein Verschleiß war nicht feststellbar.

### Beispiel 4

Es wurden Kolben gemäß Beispiel 1 gefertigt. Der Durchmesser der Kolben betrug 52 mm (Enddurchmesser). Eingesetzt wurden sie in einem luftgekühlten Zwei-Takt-Motor. Tabelle 4 gibt die erhaltenen Testergebnisse wieder. Neben einem Leistungszuwachs von bis zu 5 % wird ein Kraftstoffminderverbrauch von bis zu 6 % beobachtet. Das Verhältnis von CO zu CO2 verschiebt sich zugunsten des CO2, ohne jedoch in der Summe beider Gasanteile zuzunehmen. Aufgrund des hohen Anteil an Spülgas im Abgasstrom ist eine effektive Veränderung des Gehaltes an Kohlenwasserstoffen nicht zu erkennen. Es wurden vier Kolben untersucht. Die Drehzahl wurde bis 14000 UpM gesteigert. Mit allen Kolben wurde dasselbe Ergebnis ohne jede Schädigung erhalten. Ein Verschleiß war nicht feststellbar.

### Beispiel 5

Analog zu Beispiel 1, jedoch mit verlängertem Aufheizprogramm gefertigte Kolben mit einem Durchmesser von 65 mm wurden in einem Vier-Takt-Motor getestet. Diese Kolben wiesen eine Biegebruchfestigkeit von 112 MPa und eine Biegebruchdehnung von 0,92 % auf. Die Testergebnisse entsprachen denen des Beispiels 3. Daraus kann gefolgert werden, daß auch Festigkeiten unter 120 MPa für den Motoreinsatz ausreichend sind. Analog wurden Kolben mit einem Durchmesser von 52 mm mit weiter verringerter Festigkeit in einem Zwei-Takt-Motor getestet. Die Biegebruchfestigkeit betrug 92 MPa, die Biegebruchdehnung 0,89 %. Wie Tabelle 5 verdeutlicht, werden auch in diesem Fall positive Ergebnisse erzielt. Auch dies bestätigt, daß für den normalen Motoreinsatz geringere Biegebruchfestigkeiten ausreichend sind, sofern die Biegebruchdehnung ausreichend groß ist. In Bezug auf Drehzahlbeständigkeit und Verschleiß wurden dieselben Ergebnisse erzielt wie in den Beispielen 3 und 4.

### Beispiel 6

Im Rahmen der Screening-Versuche wurden auch Kolben erhalten, deren Biegebruchdehnung im Bereich von 0,7 bis 0,77 lag. Motortests mit diesen Kolben (Kolbendurchmesser 52 mm, 2-Takt-Motor) führten durchweg zur Zerstörung des Kolbens. Demgegenüber erfolgte in allen nachfolgenden Untersuchungen mit Kolben, die eine Biegebruchdehnung > 0,8 % aufwiesen, keine Zerstörung des Kolbens. Hieraus folgt zwangsläufig, daß eine Biegebruchdehnung von etwa 0,8 % einen kritischen Wert darstellt; diese Eigenschaft ist offensichtlich bedeutsamer als eine hohe Biegebruchfestigkeit.

**Tabelle 1 -**

| Typische Daten des verwendeten Mesophasen-Pulvers | | |
|---|---|---|
| Dichte | g/ccm | 1,42 |
| Toluolunlösliche Bestandteile (TI) | Gew.-% | 93 |
| Chinolinunlösliche Bestandteile (QI) | Gew.-% | 88,5 |
| TI - QI (Beta-Harze) | Gew.-% | 4,5 |
| Flüchtige* | Gew.-% | 9,4 |
| Sauerstoffgehalt | Gew.-% | 1,6 |
| Aschegehalt | Gew.-% | 0,21 |
| mittlere Teilchengröße | µm | 7,9 |

| | | |
|---|---|---|
| * nach 1000°C | | |

**Tabelle 2**

| Eigenschaften von Kolben nach Sintern (1000°C) und Hochtemperaturbehandlung (1800°C) | | | | | |
|---|---|---|---|---|---|
| | | Kolbendurchmesser | | | |
| | | 52 mm | | 65 mm | |
| | | 1300°C | 1800°C | 1300°C | 1800°C |
| Dichte | g/ccm | nicht bestimmt | 1,86 | 1,71 | 1,84 |
| Biegefestigkeit | MPa | - | 141 | 138 | 137 |
| Elastizitätsmodul | Gpa | - | 15,1 | 22,9 | 14,6 |
| Bruchdehnung | % | - | 0,93 | 6,6 | 6,94 |

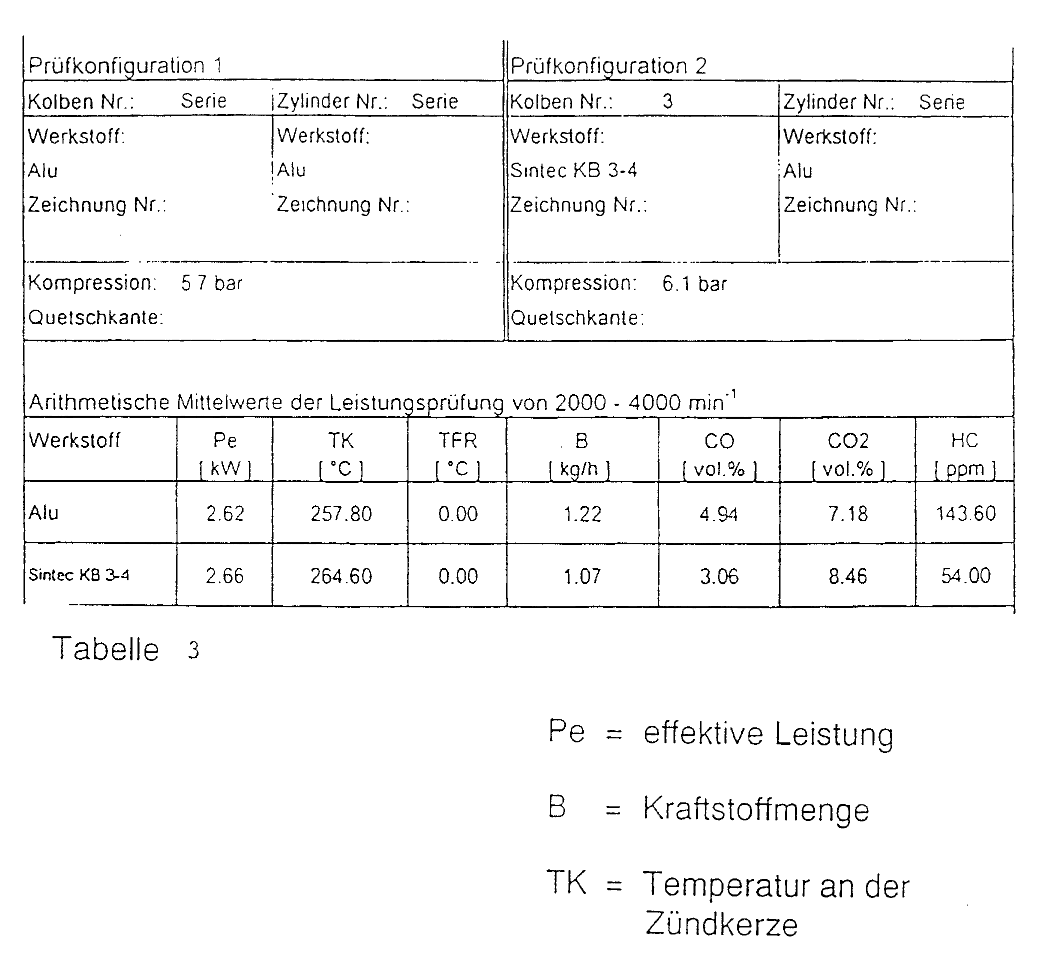

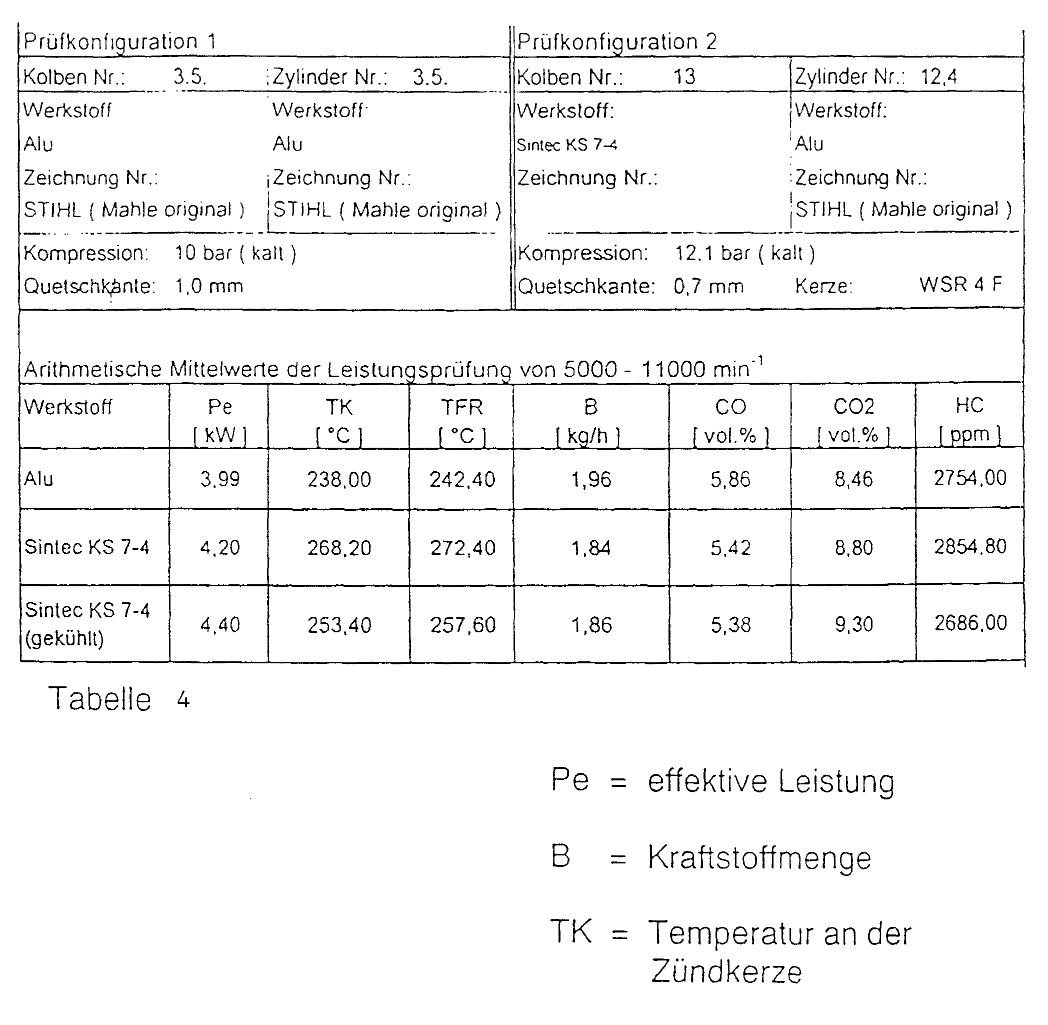

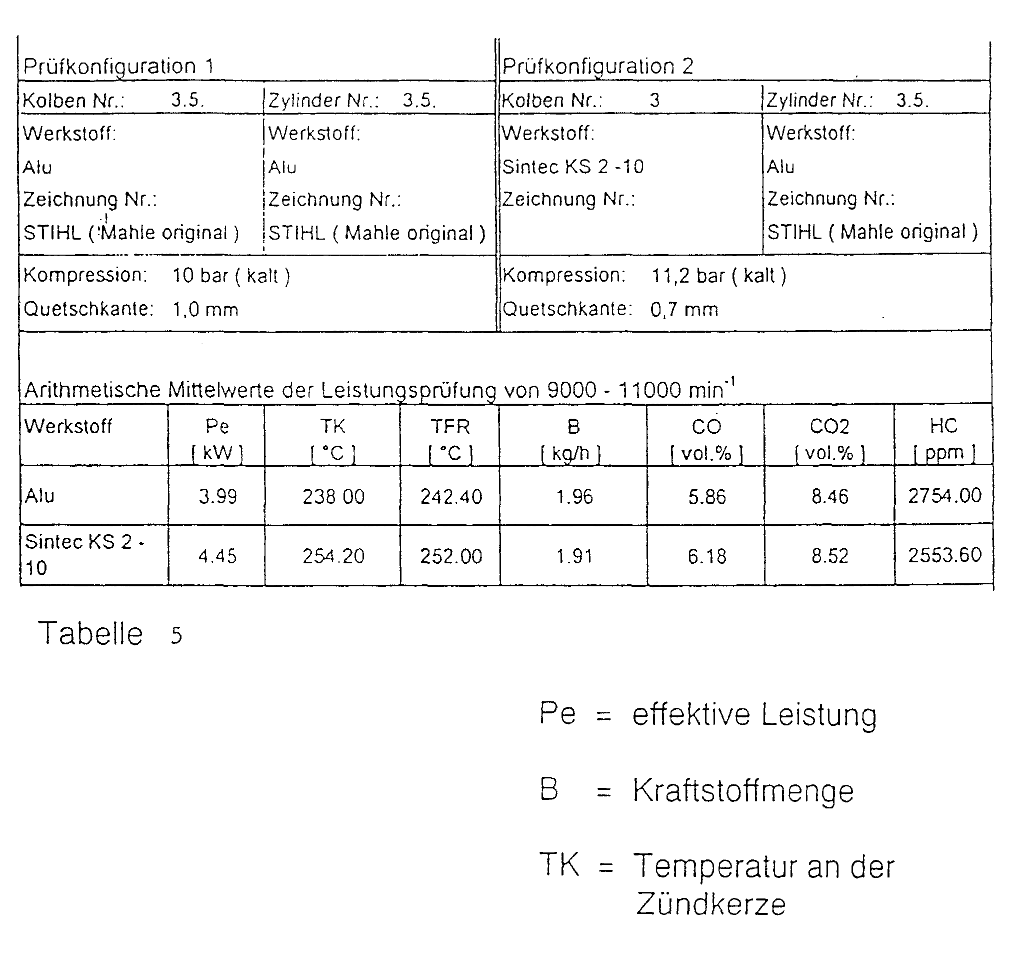

## Patentansprüche

1. Kolben aus Feinstkornkohlenstoff, der eine Biegebruchfestigkeit von mindestens 100 MPa, eine Biegebruchdehnung von mehr als 0,8 %, einen mittleren Schichtebenenabstand c/2 von kleiner 0,35 nm, eine mittlere Kristallitgröße in c-Richtung von mehr als 5 nm und eine Wärmeleitfähigkeit von mindestens 10 W/mK besitzt.

2. Kolben nach Anspruch 1, **gekennzeichnet durch** eine Wärmeleitfähigkeit von mehr als 20 W/mK.

3. Kolben nach Anspruch 1 oder 2, **gekennzeichnet durch** eine Wärmeleitfähigkeit von weniger als 60 W/mK, vorzugsweise von weniger als 45 W/mK.

4. Kolben nach einem der vorhergehenden Ansprüche, **gekennzeichnet durch** eine Biegebruchfestigkeit von mindestens 120 MPa, vorzugsweise von mindestens 140 MPa.

5. Kolben nach einem der vorhergehenden Ansprüche, **gekennzeichnet durch** eine Biegebruchdehnung von mehr als 0,9 %, vorzugsweise von mehr als 1,0 %.

6. Kolben nach einem der vorhergehenden Ansprüche, **gekennzeichnet durch** eine mittlere Kristallitgröße in c-Richtung von mehr als 10 nm, vorzugsweise mehr als 15 nm.

7. Kolben aus Feinstkornkohlenstoff nach einem der vorhergehenden Ansprüche, **gekennzeichnet durch** einen Gehalt an die Oxidation des Kohlenstoffs unter den Einsatzbedingungen des Kolbens katalysierenden Elementen, insbesondere aus der Gruppe der Übergangsmetalle, Alkali-, Erdalkalimentalle von weniger als 0,15 Gew.-%, vorzugsweise weniger als 0,1 Gew.-%.

8. Kolben nach einem der vorhergehenden Ansprüche, **gekennzeichnet durch** einen Gehalt an die Oxidation des Kohlenstoff unter den Einsatzbedingungen des Kolbens inhibierenden Elementen, ausgewählt aus Bor, Silicium und Phosphor, von bis zu 2 Gew.-%.

9. Kolben nach einem der vorhergehenden Ansprüche, **gekennzeichnet durch** ein Raumgewicht von > 1,75 g/ccm, vorzugsweise > 1,80 g/ccm.

10. Kolben nach einem der vorangehenden Ansprüche, hergestellt durch endkonturnahes quasi-statisches Verdichten eines Kolben-Grünlings aus Polyaromaten-Mesophase und anschließender Hochtemperaturbehandlung.

11. Verfahren zum Herstellen eines endkonturnahen Kolbenrohlings aus Feinstkohlenstoff mit den folgenden Schritten:
a) Endkonturnahes Verdichten eines Pulvers aus Polyaromaten-Mesophase zu einem Kolben-Grünling, mit einem Anteil an chinolinlöslichen Bestandteilen von ≥ 85 Gew.-%, vorzugsweise ≥ 88 Gew.-% und mit einem Anteil an toluolunlöslichen Bestandteilen von ≥ 90 Gew.-%, vorzugsweise ≥ 93 Gew.-% wobei ein aus dem Pulver nach Sintern bei Umgebungsdruck in nicht oxidierender Atmosphäre bis 1000°C hergestellter Formling einen Masserückstand von mehr als 90 Gew.-% der Masse vor dem Sintern besitzt.
b) Erhitzen des Grünlings bei Umgebungsdruck unter einer nicht-oxidierenden Atmosphäre auf eine Temperatur von 900 bis 1300°C und Halten auf dieser Temperatur zum Sintern,
c) Durchführen einer Hochtemperaturbehandlung des gemäß b) gebildeten Formlings unter Aufheizen auf eine Temperatur von 1400 bis 2400°C und Halten auf dieser Temperatur über 2 bis 20 Stunden zum Graphitieren, und
d) Abkühlen des Formlings mit einer Abkühlgeschwindigkeit von weniger als 4 K/min auf Umgebungstemperatur.

12. Verfahren nach Anspruch 11, **dadurch gekennzeichnet, daß** das Erhitzen des Formlings auf Graphitierungstemperatur mit einer Aufheizgeschwindigkeit von 0,1 bis 2 K/min erfolgt.

13. Verfahren nach Anspruch 11 oder 12, **dadurch gekennzeichnet, daß** der Formling auf der Sintertemperatur bis 10 Stunden gehalten wird.

14. Verfahren nach einem der Ansprüche 11 bis 13, **dadurch gekennzeichnet, daß** der Grünling auf die Sintertemperatur in einer Zeit von maximal 120 Stunden, vorzugsweise höchstens 50 Stunden erhitzt wird.

15. Verfahren nach einem der Ansprüche 11 bis 14, **dadurch gekennzeichnet, daß** der Grünling zunächst auf eine Zwischentemperatur von 350 bis 450°C erhitzt und auf dieser über eine Zeit von 1,5 bis 5 Stunden gehalten wird.

16. Verfahren nach Anspruch 15, **dadurch gekennzeichnet, daß** die Erwärmung auf die Zwischentemperatur von 350 bis 450°C über 4 bis maximal 40 Stunden, vorzugsweise maximal 20 Stunden erfolgt.

17. Verfahren nach Anspruch 15 oder 16, **dadurch gekennzeichnet, daß** das weitere Erhitzen des Grünlings auf die Sintertemperatur über 10 bis 90 Stunden, vorzugsweise maximal 40 Stunden erfolgt.

18. Verfahren nach einem der Ansprüche 11 bis 17, **dadurch gekennzeichnet, daß** der gepreßte Grünling mit einer Aufheizgeschwindigkeit von 0,1 bis 2 K/min erhitzt wird.

19. Verfahren nach einem der Ansprüche 11 bis 18, **dadurch gekennzeichnet, daß** der vorgesinterte Grünling auf die Sintertemperatur von 900 bis 1300°C in verschiedenen Temperaturbereichen mit verschiedenen Geschwindigkeiten erfolgt, die sich wie 1:5 bis 1:1 verhalten, wobei sich der erste Temperaturbereich bis 600°C und der zweite Temperaturbereich bis zur Endtemperatur des Sinterns erstreckt.

20. Verfahren nach einem der Ansprüche 11 bis 19, **dadurch gekennzeichnet, daß** der gesinterte Formling zunächst abgekühlt und anschließend der Graphitierung unterzogen wird.

21. Verfahren nach einem der Ansprüche 11 bis 20, **dadurch gekennzeichnet, daß** das Pulver aus Polyaromaten-Mesophase mit einem Druck von mindestens 80 MPa, vorzugsweise auf eine Gründichte von mehr als 1,25 g/ccm verdichtet wird.

22. Verfahren zur Herstellung eines Kolbens aus einem nach einem der Ansprüche 11 bis 21 hergestellten Kolbenrohling aus Feinstkohlenstoff, **dadurch gekennzeichnet, daß** der abgekühlte Rohling einer mechanischen oder chemischen Feinnachbehandlung zur endgültigen Formgebung des Kolbens und/oder zur Einstellung seiner Eigenschaften unterzogen wird.

23. Pulver aus Polyaromaten-Mesophase zur Herstellung eines Kohlenstoff-Kolbens, **gekennzeichnet durch**
a) einen Anteil an chinolinunlöslichen Bestandteilen von ≥ 85 Gew.-%, vorzugsweise ≥ 88 Gew.-%;
b) einen Anteil an toluolunlöslichen Bestandteilen von ≥ 90 Gew.-%; vorzugsweise von ≥ 93 Gew.-%, und das weiter **dadurch** gekennzeichnet ist, daß
c) ein aus dem Pulver nach dem Sintern in nicht-oxidierender Atmosphäre bei Umgebungsdruck bis 1000°C hergestellter Formling einen Massenrückstand von mehr als 90 Gew.-% der Masse vor dem Sintern besitzt.

24. Pulver nach Anspruch 23, weiter **gekennzeichnet durch**
a) eine Pyknometerdichte von > 1,40 g/ccm;
b) einen Sauerstoffgehalt von weniger als 3 Gew.-%, bevorzugt weniger als 2 Gew.-%;
c) einen Veraschungsrückstand von weniger als 0,25 Gew.-%, bevorzugt weniger als 0,2 Gew.-%;
d) eine mittleren Korndurchmesser der Kornverteilungssummenkurve d50 von 3 bis 12 µm, bevorzugt von 5 bis 10 µm;
e) einen Grobkornanteil der Kornverteilungssummenkurve mit einem Korndurchmesser von d ≥ 20 µm von weniger als 5 %.

25. Verwendung eines Kolbens aus Feinstkohlenstoff nach einem der Ansprüche 1 bis 10 in Verbrennungsmotoren, insbesondere Benzin-, Diesel-, gasbetriebenen Motoren, oder in Kolbenverdichtern.

## Claims

1. Piston of finest grain carbon having a minimum bending strength of 100MPa, a bending elongation of more than 0.8%, an average interlayer distance c/2 of less than 0.35nm, an average crystallite size in the c direction of more than 5nm and a heat conductivity of at least 10 W/mK.

2. Piston according to claim 1, **characterized by** a heat conductivity of more than 20 W/mK.

3. Piston according to claim 1 or 2, **characterized by** a heat conductivity of less than 60 W/mK, preferably less than 45 W/mK.

4. Piston according to any one of the preceding claims, **characterized by** a bending strength of at least 120 MPa, preferably at least 140 MPa.

5. Piston according to any one of the preceding claims, **characterized by** a bending elongation of more than 0.9%, preferably more than 1.0%.

6. Piston according to any one of the preceding claims, **characterized by** an average crystallite size in the c direction of more than 10nm, preferably more than 15nm.

7. Piston of finest grain carbon according to any one of the preceding claims, **characterized by** having a content, of less than 0.15 weight %, preferably less than 0.1 weight %, of elements catalyzing oxidation of carbon under operational conditions of the piston, in particular from the group of the transition metals, alkaline, alkaline earth metals.

8. Piston according to any one of the preceding claims, **characterized by** having a content, of up to 2 weight %, of elements inhibiting oxidation of carbon under operational conditions of the piston, selected from boron, silicon and phosphor.

9. Piston according to any one of the preceding claims, **characterized by** a volume weight of > 1.75 g/ccm, preferably > 1.80 g/ccm.

10. Piston according to any one of the preceding claims, produced by quasi static compacting of a piston green product form polyaromatic mesophase to almost its final shape and subsequent high-temperature treatment.

11. Method for the production of a piston blank of finest grain carbon to a near-final shape comprising the following steps:
a) condensation of a polyaromatic mesophase powder into a piston green product having a near-final shape, with a portion of quinoline-insoluble components of ≥ 85 weight %, preferably ≥ 88 weight %, and with a portion of toluene-insoluble components of ≥ 90 weight %, preferably ≥ 93 weight %, wherein a shaped form produced from the powder after sintering at ambient pressure in a non-oxidizing atmosphere up to 1000°C has a mass residue of more than 90 weight % of the mass before sintering;
b) heating up of the green product at ambient pressure in an non-oxidizing atmosphere to a temperature between 900 to 1300°C and maintenance at this temperature for sintering;
c) carrying out high-temperature treatment of the shaped form fashioned according to b) thereby heating up to a temperature between 1400 and 2400°C and keeping it at this temperature for between 2 and 20 hours for graphitizing; and
d) cooling down of the shaped form to ambient temperature with a cooling down speed of less than 4 K/min.

12. Method according to claim 11, **characterized in that** heating of the shaped form to graphitizing temperature is effected with a heating up speed of between 0.1 and 2 K/min.

13. Method according to claim 11 or 12, **characterized in that** the shaped form is kept at the sintering temperature for up to 10 hours.

14. Method according to any one of the claims 11 through 13, **characterized in that** the green product is heated up to sintering temperature within a maximum period of 120 hours, preferably at the most 50 hours.

15. Method according to any one of the claims 11 through 14, **characterized in that** the green product is first heated to an intermediate temperature between 350 and 450°C and is kept at this temperature for a period between 1.5 and 5 hours.

16. Method according to claim 15, **characterized in that** the heating up to the intermediate temperature between 350 and 450°C is effected over 4 to a maximum of 40 hours, preferably a maximum of 20 hours.

17. Method according to claim 15 or 16, **characterized in that** further heating of the green product to sintering temperature is effected over 10 to. 90 hours, preferably not more than 40 hours.

18. Method according to any one of the claims 11 through 17, **characterized in that** the compacted green product is heated up with a heating speed between 0.1 and 2 K/min.

19. Method according to any one of the claims 11 through 18, **characterized in that** the pre-sintered green product is heated to a sintering temperature between 900 and 1300°C in different temperature ranges with different speeds with a mutual relationship of 1:5 to 1:1, wherein the first temperature range extends to 600°C and the second temperature range extends to the final sintering temperature.

20. Method according to any one of the claims 11 through 19, **characterized in that** the sintered shaped form is first cooled down and subsequently subjected to graphitization.

21. Method according to any one of the claims 11 through 20, **characterized in that** the polyaromatic mesophase powder is compacted at a pressure of at least 80 MPa, preferably to a green product density of more than 1.25 g/ccm.

22. Method for producing a piston from a piston blank of finest grain carbon, produced according to any one of the claims 11 through 22, **characterized in that** the cooled down blank is subjected to mechanical or chemical fine post-treatment to give the piston its final shape and/or to establish its properties.

23. Polyaromatic mesophase powder for the production of a carbon piston, **characterized by**
a) a portion of quinoline-insoluble components of ≥ 85 weight %, preferably ≥ 88 weight %;
b) a portion of toluene-insoluble components of ≥ 90 weight %, preferably ≥ 93 weight %, and being further **characterized in that**
c) a shaped form produced from said powder after sintering in non-oxidizing atmosphere at a ambient pressure of up to 1000°C has a mass residue of more than 90 weight % of the mass before sintering.

24. Powder according to claim 23, further caracterized by
a) a pycnometer density of > 1.40 g/ccm;
b) an oxygen content of less than 3 weight %, preferably less than 2 weight %;
c) an ashing residue of less than 0.25 weight %, preferably less than 0.2 weight %;
d) an average grain diameter of the grain'distribution sum curve d50 between 3 and 12µm, preferably between 5 and 10µm;
e) a coarse grain portion of the grain distribution sum curve having a grain diameter of d ≥ 20µm of less than 5%.

25. Use of a piston of finest carbon according to any one of the claims 1 through 10, in combustion engines, in particular gasoline, diesel, gas-operated engines or in reciprocating compressors.

## Revendications

1. Piston constitué de carbone à grains ultrafins, présentant une résistance à la flexion d'au moins 100 MPa, un allongement de pliage de plus de 0,8 %, une distance moyenne entre les plans de couches c/2 inférieure à 0,35 nm, une taille moyenne de cristallite dans la direction c de plus de 5 nm et une conductibilité thermique d'au moins 10 W/mK.

2. Piston selon la revendication 1, **caractérisé par** une conductibilité thermique de plus de 20 W/mK.

3. Piston selon la revendication 1 ou 2, **caractérisé par** une conductibilité thermique inférieure à 60 W/mK, de préférence inférieure à 45 W/mK.

4. Piston selon l'une quelconque des revendications précédentes, **caractérisé par** une résistance à la flexion d'au moins 120 MPa, de préférence d'au moins 140 MPa.

5. Piston selon l'une quelconque des revendications précédentes, **caractérisé par** un allongement de pliage supérieur à 0,9 %, de préférence supérieur à 1,0 %.

6. Piston selon l'une quelconque des revendications précédentes, **caractérisé par** une taille moyenne de cristallite dans la direction c supérieure à 10 nm, de préférence supérieure à 15 nm.

7. Piston constitué de carbone à grains ultrafins selon l'une quelconque des revendications précédentes, **caractérisé par** une teneur en éléments catalysant l'oxydation du carbone dans les conditions d'utilisation du piston, en particulier appartenant au groupe des métaux de transition, des métaux alcalins, des métaux alcalinoterreux, teneur inférieure à 0,15 % en poids, de préférence inférieure à 0,1 % en poids.

8. Piston selon l'une quelconque des revendications précédentes, **caractérisé par** une teneur en éléments inhibant l'oxydation du carbone dans les conditions d'utilisation du piston choisis parmi le bore, la silice et le phosphore, allant jusqu'à 2 % en poids.

9. Piston selon l'une quelconque des revendications précédentes, **caractérisé par** un poids spécifique de 1,75 g/cm³, de préférence > 1,80 g/cm³.

10. Piston selon l'une quelconque des revendications précédentes, réalisé par la compression quasi statique proche du profil final d'une pièce comprimée de piston en mésophase de polyaromates et le traitement consécutif à haute température.

11. Procédé de fabrication d'une ébauche de piston proche du profil final en carbone ultrafin comportant les étapes suivantes :
a) compression proche du profil final d'une poudre de mésophase de polyaromates pour constituer une pièce comprimée de piston, dont la part de composants solubles dans la quinoléine est égale ou supérieure à 85 % en poids, de préférence égale ou supérieure à 88 % en poids et dont la part de composants insolubles dans le toluène est égale ou supérieure à 90 % en poids, de préférence inférieure ou supérieure à 93 % en poids, étape dans laquelle une pièce moulée fabriquée à partir de cette poudre par frittage à pression ambiante dans une atmosphère non oxydante jusqu'à 1000°C présente un résidu de masse de plus de 90 % en poids de la masse avant frittage ;
b) chauffage de la pièce comprimée à pression ambiante dans une atmosphère non oxydante à une température de 900 à 1300°C et maintien à cette température pour le frittage ;
c) réalisation d'un traitement à haute température de la pièce moulée formée conformément au point b) par chauffage à une température de 1400 à 2400°C et maintien à cette température pendant 2 à 20 heures pour la graphitisation ;
d) refroidissement de la pièce moulée à une vitesse de refroidissement inférieure à 4 K/min à température ambiante.

12. Procédé selon la revendication 11, **caractérisé en ce que** le chauffage de la pièce moulée à la température de graphitisation est réalisé à une vitesse de réchauffage de 0,1 à 2 K/min.

13. Procédé selon la revendication 11 ou 12, **caractérisé en ce que** la pièce moulée est maintenue à température de frittage pendant une durée pouvant aller jusqu'à 10 heures.

14. Procédé selon l'une quelconque des revendications 11 à 13, **caractérisé en ce que** la pièce comprimée est chauffée à la température de frittage sur une durée de 120 h, de préférence en 50 heures au plus.

15. Procédé selon l'une quelconque des revendications 11 à 14, **caractérisé en ce que** la pièce comprimée est d'abord chauffée à une température intermédiaire de 350 à 450°C et maintenue à celle-ci pendant une durée de 1,5 à 5 heures.

16. Procédé selon la revendication 15,, **caractérisé en ce que** le chauffage à 1a température intermédiaire de 350 à 450°C est réalisé sur une durée de 4 à 40 heures au maximum, de préférence de 20 heures au maximum.

17. Procédé selon la revendication 15 ou 16, **caractérisé en ce que** le chauffage complémentaire de la pièce comprimée à la température de frittage est effectué sur une durée de 10 à 90 heures, de préférence de 40 heures au maximum.

18. Procédé selon l'une quelconque des revendications 11 à 17, **caractérisé en ce que** la pièce comprimée est chauffée à une vitesse d'échauffement de 0,1 à 2 K/min.

19. Procédé selon l'une quelconque des revendications 11 à 18, **caractérisé en ce que** le chauffage de la pièce comprimée préfrittée à la température de frittage de 900 à 1300°C s'effectue dans différentes zones de températures à des vitesses différentes, dans un rapport de 1:5 jusqu'à 1:1, la première zone de température s'étendant jusqu'à 600°C et la deuxième zone de température jusqu'à la température finale du frittage.

20. Procédé selon l'une quelconque des revendications 11 à 19, **caractérisé en ce que** la pièce moulée frittée est d'abord refroidie et ensuite soumise à graphitisation.

21. Procédé selon l'une quelconque des revendications 11 à 20, **caractérisé en ce que** la poudre constituée de mésophase de polyaromates est comprimée à une pression d'au moins 80 MPa, de préférence à une densité de pièce moulée supérieure à 1,25 g/cm³.

22. Procédé de fabrication d'un piston réalisé à partir d'une pièce moulée de piston en carbone ultrafin selon l'une des revendications 11 à 21, **caractérisé en ce que** l'ébauche refroidie est soumise à un traitement ultérieure mécanique ou chimique de finition pour la conformation définitive du piston et/ou pour l'établissement de ses caractéristiques.

23. Poudre en mésophase de polyaromates pour la fabrication d'un piston en carbone, **caractérisée par** :
a) une part de composants solubles dans la quinoléine égale ou supérieure à 85 % en poids, de préférence égale ou supérieure à 88 % en poids ;
b) une part de composants insolubles dans le toluène égale ou supérieure à 90 % en poids, de préférence égale ou supérieure à 93 % en poids, et qui est de plus **caractérisée en ce qu'**
c) une pièce moulée réalisée à partir de la poudre après frittage dans une atmosphère non oxydante à pression ambiante jusqu'à 1000°C présente un résidu de masse de plus de 90 % en poids de la masse avant le frittage.

24. Poudre selon la revendication 23, caractérisée de plus par :
a) une densité pycnométrique supérieure à 1,40 g/cm³ ;
b) une teneur en oxygène inférieure à 3 % en poids, de préférence inférieure à 2 % en poids ;
c) un résidu d'incinération inférieur à 0,25 % en poids, de préférence inférieur à 0,2 % en poids ;
d) un diamètre de grain moyen de la courbe globale de répartition granulométrique d50 de 3 à 12 µm, de préférence de 5 à 10 µm ;
e) une part de gros grains de la courbe globale dont la répartition granulométrique à diamètre de grain "d" égal ou supérieur à 20 µm est inférieure à 5 %.

25. Utilisation d'un piston en carbone ultrafin selon l'une quelconque des revendications 1 à 10 dans des moteurs à combustion, en particulier des moteurs à essence, des moteurs diesel, des moteurs fonctionnant au gaz ou dans des compresseurs à piston.
